# EUROPEAN PATENT APPLICATION

(11) **EP 3 399 331 A1**
(43) Date of publication of application: **07.11.2018**
(21) Application number: 16881440.8
(22) Date of filing: 20.12.2016
(51) Int. Cl.: G01S 13/34, E03C 1/05

(54) **SENSOR, AND FAUCET DEVICE USING SENSOR**

(30) Priority: 28.12.2015 JP 2015256905
(71) Applicant: Panasonic Intellectual Property Management Co., Ltd., Osaka-shi, Osaka 540-6207 (JP)
(72) Inventor: SUGINO, Satoshi, Osaka 540-6207 (JP)
(74) Representative: Müller-Boré & Partner Patentanwälte PartG mbB
(86) International application number: PCT/JP2016/005189
(87) International publication number: WO 2017/115459

(57) **Abstract**

A sensor and a faucet device, for measuring distance to an object and detect an object at close distance are provided. The sensor (10) has a detector (11) and a processing device (13). The detector (11) is configured to output a digital value of a beat signal having a frequency difference between radio waves radiated and radio waves received. In the processing device (13), a frequency analyzer (131) is configured to compute a frequency spectrum of the beat signal. A corrector (134) therein is configured to fill a digital value to the frequency analyzer (131) with zeros whose number corresponds to a difference between the bit-number of the detector (11) on the output side and the bit-number of the frequency analyzer (131) on the input side. A calculator (135) therein is configured to find a peak frequency corresponding to a power peak value from the frequency spectrum computed with the frequency analyzer (131) to convert the peak frequency into the distance to the object.

## Description

### Technical Field

The invention relates to a sensor configured to detect an object by radio waves, and a faucet device that has the sensor and is configured to be turned on and off through the sensor to control flow of water.

### Background Art

In a related radar, it has been proposed to transmit a signal swept with a transmitter of a transceiver from an antenna transmitter to receive reflected waves through an antenna receiver (see Patent Document 1). Patent Document 1 discloses that for correlation processing between a reference signal and an input signal, the reference signal is made by zero-filling a standard reference signal and then FFT processing of the reference signal is performed. That is, zero-fill in Patent Document 1 is performed in order to make a code length of the standard reference signal accord with a code length of the input signal.

A configuration example of an automatic faucet device with a microwave Doppler sensor is described in Patent Document 2.

Technology of Patent Document 1 is applied to, for example a radar equipped for an air vehicle. Therefore, detecting an object at close distance of about several centimeters is unexpected.

Patent Document 2 discloses the configuration including the microwave Doppler sensor, but fails to disclose technology for detecting an object at the close distance of about several centimeters with a radio wave sensor being configured to intermittently radiate radio waves. The Doppler sensor is able to detect movement of an object, but has difficulty in measuring the distance to the object.

### Citation List

### Patent Literature

Patent Document 1: JP 2014-182010 A
Patent Document 2: JP 2013-72237 A

### Summary of Invention

It is an object of the present invention to provide a sensor capable of measuring the distance to an object and also detecting an object at close distance. It is a further object of the present invention to provide a faucet device with the sensor.

A sensor according an aspect of the present invention includes a detector and a processor device. The detector is configured to radiate radio waves whose frequency varies with time into space and receive radio waves from the space. The processor device is configured to measure distance to an object in the space based on a difference between a frequency of the radio waves radiated and a frequency of the radio waves received. The detector includes an analog-to-digital converter configured to output a digital value of a beat signal having the difference between the frequency of the radio waves radiated and the frequency of the radio waves received. The detector is configured to repeatedly operate according to a cycle period that contains a radiation period allowing the detector to radiate radio waves and an idle period prohibiting the detector from radiating radio waves, thereby intermittently radiating radio waves. The processor device includes a frequency analyzer and a corrector. The frequency analyzer has a bit-number on an input side thereof larger than a bit-number of the analog-to-digital converter on an output side thereof. The frequency analyzer is configured to compute a frequency spectrum of the beat signal. The corrector is configured to add zeros to the digital value provided to the frequency analyzer. The number of the zeros is equal to a difference between the bit-number of the analog-to-digital converter on the output side and the bit-number of the frequency analyzer on the input side. The calculator is configured to find a peak frequency corresponding to a power peak value from the frequency spectrum computed with the frequency analyzer to convert the peak frequency into the distance to the object.

A faucet device according to an aspect of the present invention includes the sensor configured to determine whether or not the object is present in the monitoring region defined based on the distance, and a water faucet configured to receive the control signal and then selectively turn on and off to control flow of water. The processing device is configured to provide the water faucet with a turn-on signal as the control signal to allow water to flow when the target object is present in the monitoring region, and provide the water faucet with a turn-off signal as the control signal to stop the water from flowing when the target object is not present in the monitoring region.

The configuration enables measurement of the distance to an object and detection of an object at close distance.

### Brief Description of Drawings

FIG. 1 is a block circuit diagram showing Configuration Example 1 of a sensor in accordance with an embodiment;
FIG. 2 illustrates transmission waves in the embodiment;
FIG. 3 illustrates an operation of the embodiment;
FIG. 4 is a block circuit diagram showing Configuration Example 2 of the sensor in accordance with the embodiment;
FIG. 5 is a block circuit diagram showing Configuration Example 3 of the sensor in accordance with the embodiment; and
FIG. 6 is a sectional view of a sink equipped with a faucet device in the embodiment.

### Description of Embodiments

Each configuration example to be explained below relates to a sensor configured to radiate radio waves into space to receive radio waves from the space, thereby extracting spatial information and a faucet device with the sensor. Here, the spatial information is selected from information on the distance to an object in the space, information representing whether or not an object is present in a monitoring region defined in the space, information representing whether or not an object in the monitoring region is a target object as a monitored object, and the like. In the sensor to be explained below, each of the information representing whether or not the object is present in the monitoring region and the information representing whether or not the object in the monitoring region is the target object is information based on information on the distance to the object in the space. The sensor therefore has a function of measuring the distance to an object in the space. The object may be a human body. In this case, the sensor is applicable to a motion detector. Alternatively, the sensor may be configured to output a control signal for device control.

It is assumed that the faucet device with the sensor is configured by combining the sensor with a water faucet disposed in a kitchen and a bathroom (lavatory). The water faucet includes a valve(s) such as a solenoid valve(s) that is(are) provided in a channel(s) to an outlet(s) thereof, and is configured to receive the control signal from the sensor to operate the valve so that the valve turns on and off to control flow of water. For example, when the faucet device is combined with a sink in a kitchen, the sensor is attached to a spout including an outlet thereof. The sensor is attached to part of the spout close to the outlet. A monitoring region for monitoring a target object is set in a predetermined rage near the outlet. The monitoring region is determined based on the distance from the sensor. The sensor is configured to extract, as the spatial information, information representing whether or not a target object such as hands, the dishes, cooking tools, vegetables and fruit is present in the monitoring region.

The sensor is configured to determine timing for outputting the control signal that forces the valve to turn on and off to control flow of water based on relational information between the monitoring region and the target object. The simplest relational information includes the sensor providing the valve with a control signal as an instruction to turn on to allow water to flow when a present condition that the target object is present in the monitoring region is satisfied, and the sensor providing the valve with a control signal as an instruction to turn off to stop the water from flowing when an absent condition that the target object is not present in the monitoring region is satisfied. The relational information for the sensor determining the output timing of a control signal that forces the valve to turn on and off to control flow of water includes various conditions in order to enhance convenience of the water faucet. However, the various conditions are not subject and therefore explanation thereof is omitted.

### (Configuration Example 1 of Sensor)

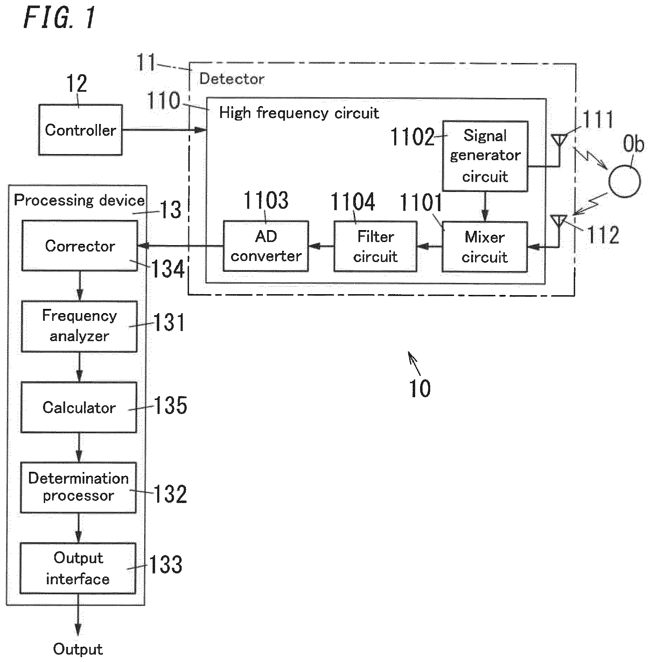

As explained below, a sensor 10 includes a detector 11, a controller 12 and a processing device 13 as shown in FIG. 1. The detector 11 is configured to radiate radio waves into space to receive radio waves from the space. Spatial information will be extracted by comparing the radio waves transmitted from the detector 11 with the radio waves received through the detector 11. The controller 12 is configured to provide the detector 11 with timing for radiating radio waves, and the processing device 13 is configured to extract the spatial information based on output signals from the detector 11. The detector 11 or the processing device 13 may determine the timing for radiating radio waves. This sort of configuration enables omission of the controller 12.

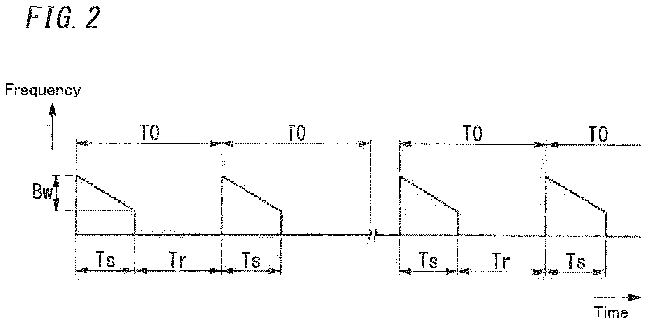

In an operation example shown in FIG. 2, the controller 12 provides the detector 11 with an instruction to cause a radiation period Ts and an idle period Tr to alternately occur, where the radiation period Ts is a time period causing the detector to radiate radio waves into the space and the idle period Tr is a time period prohibiting the detector from radiating radio waves into the space. That is, the detector 11 will intermittently radiate radio waves into the space. Hereinafter, a total time period of one radiation period Ts and one idle period Tr is called a cycle period T0. For example, the radiation period Ts is 1 [ms] and the cycle period T0 is 50 [ms]. The frequency of the radio waves, the radiation period Ts and the idle period Tr are selected according to the type of spatial information to be detected. The frequency of the radio waves is selected from a frequency band from microwave to millimeter wave.

The detector 11 is configured to not only radiate radio waves during the radiation period Ts but also receive radio waves during the radiation period Ts. That is, it can be considered that radiation of radio waves and reception of radio waves are substantially performed at the same time because time from the radiation of radio waves from the sensor 10 to the reception by the sensor 10 of radio waves reflected by an object Ob in the monitoring region is sufficiently shorter than the radiation period Ts. Hereinafter, radio waves radiated from the sensor 10 are called transmission waves, while radio waves reflected by the object Ob is called reflection waves.

For example, the monitoring region by the sensor 10 is set to a range of 3 [cm] to 60 [cm], where an origin thereof is the location of the sensor 10. The radiation period Ts is set to 1 [ms]. In this case, it takes approximately 0.2 [ns] to 4 [ns] from radiation of the transmission waves to reception of the reflection waves which is less than a millionth of the radiation period Ts. Therefore, the radiation of the transmission waves and the reception of the reflection waves may be performed at the same timing.

As can be seen from the above explanation, the sensor performs the radiation of the transmission waves and the reception of the reflection waves during the radiation period Ts, but does not perform the reception of the reflection waves during the idle period Tr. Therefore, the detector 11 stops operating during the idle period Tr. During the idle period Tr, the processing device 13 performs extraction processing of spatial information and therefore consumes electric power, but the detector 11 hardly consumes electric power. It is therefore possible to reduce power consumption when compared with receiving such reflection waves during the idle period Tr. Since the sensor 10 allows the idle period Tr to be remarkably longer than the radiation period Ts (e.g., 50 times), power consumption during the idle period Tr is suppressed, thereby remarkably reducing power consumption as a whole.

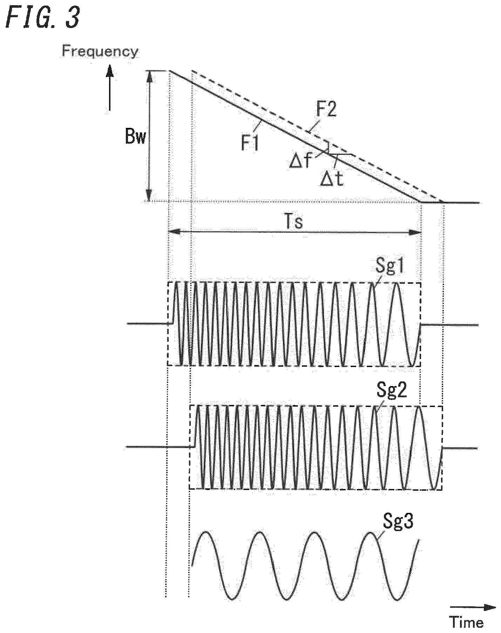

The detector 11 includes one chip integrated circuit configured to monitor spatial information in accordance with a frequency-modulated continuous-wave (FMCW) method. The one chip integrated circuit includes a transmitter circuit and a receiver circuit. As depicted by a reference sign Sg1 in FIG. 3, the detector 11 generates an FMCW signal whose frequency varies with time. That is, the FMCW signal may be regarded as a signal obtained by frequency modulation so as to convert time into frequency. The sensor 10 explained herein generates the FMCW signal so that the frequency descends linearly with time during the radiation period Ts as depicted by a reference sign F1 in FIG. 3.

The detector 11 includes a transmitting antenna 111 configured to receive the FMCW signal depicted by the reference sign Sg1 of FIG. 3 to radiate radio waves whose frequency varies with time into the space. The detector 11 also includes a receiving antenna 112 configured to receive radio waves from the space to convert the radio waves into a reception signal depicted by a reference sign Sg2 in FIG. 3. Hereinafter, radio waves radiated from the transmitting antenna 111 are called transmission waves, while radio waves reflected by the object Ob of radio waves received through the receiving antenna 112 are called reflection waves.

The detector 11 is configured to mix the FMCW signal Sg1 and the reception signal Sg2 to produce a mixed signal. The mixed signal contains a frequency component of a difference between a frequency of the FMCW signal Sg1 and a frequency of the reception signal Sg2. In other words, the mixed signal contains a frequency component of a difference between a frequency of the transmission waves and a frequency of the reflection waves. Hereinafter, a signal having a frequency difference between the frequency of radio waves radiated from the transmitting antenna 111 and the frequency of radio waves received through the receiving antenna 112 is called a beat signal. An example of the beat signal is depicted by a reference sign Sg 3 in FIG. 3. If the distance to the object Ob reflecting radio waves is constant during the radiation period Ts, a frequency of the beat signal is constant during the radiation period Ts.

When the receiving antenna 112 receives radio waves, reflected by the object Ob in the space, of radio waves radiated from the transmitting antenna 111, time from radiation to reception of the radio waves corresponds to the distance to the object Ob. The frequency of the transmission waves varies with time. It is therefore possible to measure the time from radiation to reception of the radio waves based on the frequency difference between the transmission waves and the reflection waves. That is, finding the frequency of the beat signal contained in a signal from a mixer circuit 1101 enables measuring the distance to the object Ob.

When the frequency of the transmission waves varies as depicted by the reference sign F1 in FIG. 3 and the frequency of the reflected waves varies as depicted by a reference sign F2 in FIG. 3, let (Bw/Ts) [Hz/s] be a varying ratio of frequency to time during the radiation period Ts. Here, Bw is a frequency sweep (or varying) range during the radiation period Ts. Since the frequency of the FMCW signal descends linearly during the radiation period Ts, the frequency sweep range Bw is equal to a difference between the frequency of the transmission waves at start time of the radiation period Ts and the frequency of the transmission waves at end time of the radiation period Ts. In the FMCW signal, the frequency sweep range Bw during the radiation period Ts and the radiation period Ts are known and therefore the varying ratio of frequency to time during the radiation period Ts is also known.

Time Δt [s] from radiation to reception of radio waves is represented by Δt=Δf(Ts/Bw), where Δf [Hz] is a frequency difference between the transmission waves and the reflection waves and (Bw/Ts) is the varying ratio of frequency. That is, the frequency difference Δf between the transmission waves and the reflection can be replaced with the time Δt from radiation to reception of radio waves. The distance R [m] to the object Ob reflecting radio waves is represented by R=c·Δt/2, where c [m/s] is the velocity of light. The distance is therefore represented by R=(c·Δf/2)(Ts/Bw). In other words, it is possible to measure the distance R to the object Ob from the sensor 10 by finding the frequency difference Δf between the transmission waves and the reflection waves.

Here, by letting (c/2)(Ts/Bw) be k, the distance is represented by R=k· Δf- a simple relation of "the distance R to the object Ob from the sensor 10 is proportional to the frequency difference Δf". According to the above relational expression, the distance to the object Ob from the sensor 10 depends on the varying ratio of frequency during the radiation period Ts without depending on the frequency of the transmission waves.

As an example, let the radiation period Ts be 1 [ms] and let the frequency sweep range Bw during the radiation period Ts be 150 [MHz]. In this case, the coefficient k is represented by k=(c/2)(Ts/Bw)=1×10⁻³ [m·s], where the velocity of light c is 3×10⁸ [m/s]. Therefore, the distance R to the object Ob from the sensor 10 is R=1 [m] when the frequency difference Δf is 1 [kHz], and is R=1×10⁻¹ [m]=10 [cm] when the frequency difference Δf is 100 [Hz].

As stated above, the sensor 10 will convert the time Δt from radiation to reception of radio waves into the difference Δf between the frequency of the transmission waves and the frequency of the reflection waves. The processing device 13 therefore requires analyzing a frequency spectrum of the beat signal from the detector 11 to extract a frequency corresponding to the frequency difference Δf. The frequency spectrum has domains into which a frequency range to be analyzed is divided, and data associating the domains with respective signal energy. The frequency difference Δf will vary according to the distance to the object Ob from the sensor 10. When the distance the object Ob from the sensor 10 decreases, the frequency difference Δf also decreases. Therefore, when the monitoring region to be set so as to detect a target object is at close distance from the sensor 10, a lower limit of a frequency to be analyzed with the processing device 13 needs to be set to a low frequency.

In case the sensor 10 is designed based on the abovementioned values, the distance R is 10 [cm] when the frequency difference Δf is 100 [Hz]. Therefore, in order to set the monitoring region to the distance of approximately 10 [cm] from the sensor 10, the lower limit of the frequency to be analyzed with the processing device 13 needs to be about 100 [Hz]. In other words, in order to measure distance with increments of 10 [cm] through the sensor 10, each of the domains (frequency bins) in the frequency spectrum needs to be 100 [Hz].

The detector 11 will intermittently radiate the transmission waves to provide the processing device 13 with a beat signal for each time corresponding to the radiation period Ts. Therefore, a minimum frequency allowing analysis of the frequency spectrum is restricted by the radiation period Ts. For example, when the sensor 10 is designed based on the abovementioned values, the radiation period Ts is 1 [ms] and therefore each of the frequency bins is 1 [kHz] when output signals from the detector 11 are used as is. That is, a measurable (or detectable) minimum amount of distance is 1 [m].

Examples of a method of narrowing a width of each frequency bin include a method of lengthening the radiation period Ts and a method of widening a frequency sweep range Bw during the radiation period Ts. In other words, it is considered that a varying ratio of frequency of the FMCW signal-(Bw/Ts) would be increased. However, for a design satisfying various conditions such as movement velocity of the target object to be detected, range of frequency swept as the transmission waves and production cost of the sensor 10, it is difficult to largely change the radiation period Ts and the frequency sweep range Bw.

An object of technology provided for the sensor 10 explained herein is to reduce a width of each frequency bin without changing output signals from the detector 11. In order to reduce each frequency bin without changing the radiation period Ts, the sensor 10 will perform conversion processing of the beat signal into a digital value as preprocessing prior to computation processing of the frequency spectrum, and addition processing of a predetermined number of zeros to the digital value converted.

The addition processing of the zeros to the digital value is called zero padding. The zero padding is the increasing processing of the bit number of the digital value by adding zeros as necessary number of digits to the digital value as an analyzed target of the frequency spectrum. Performing the zero padding enables reduction in width of each frequency bin.

The number of zeros in the zero padding is determined based on a sampling number for obtaining a digital value of the beat signal. For example, when the sampling number during the radiation period Ts is 25, the digital value is provided with zeros whose number corresponds to approximately 250 that is the number of digits after the zero padding and is 10 times the sampling number. When the sampling number is 25 and the width of each frequency bin is 1 [kHz], the zero padding enables reduction up to 100 [Hz] in width of each frequency bin. That is, it is possible to make the frequency spectrum have increments of 100 [Hz] by performing the zero padding. Note that the values explained herein are merely examples, and may be changed according to a design concept or the like.

The processing device 13 includes a calculator 135. The calculator 135 is configured to find a peak frequency corresponding to a power peak value from the frequency spectrum computed with the frequency analyzer 131 to determine the peak frequency as a frequency of the beat signal. That is, the calculator 135 will regard the peak frequency as the abovementioned frequency difference Δf to convert the frequency difference Δf into the distance to the object Ob. When the frequency spectrum contains two or more frequencies corresponding to the power peak value, it is possible to measure respective distance to different objects Ob. It is also possible to extract an object Ob in the monitoring region as a target object when the monitoring region based on distance is set to the processing device 13.

A configuration of the sensor 10 will hereinafter be explained in detail. The detector 11 of the sensor 10 includes a high frequency circuit 110 composed of a high frequency transmitter and receiver circuits, and the transmitting and receiving antennas 111 and 112 connected to the high frequency circuit 110. The high frequency circuit 110 is configured to provide the transmitting antenna 111 with a transmission signal to radiate radio waves into the space, and extract a signal containing the spatial information from a reception signal derived from radio waves received the space through the receiving antenna 112. Each of the transmitting and receiving antennas 111 and 112 is a planar antenna such as a microstrip antenna. Examples of this sort of antenna further includes a patch antenna and a slot antenna. The transmitting and receiving antennas 111 and 112 are arranged closely to each other so that the distance to the monitoring region from the transmitting antenna 111 and the distance to the monitoring region from the receiving antenna 112 have a comparatively small difference therebetween.

Each of the transmitting and receiving antennas 111 and 112 is designed to correspond to a frequency band that is greater than 24.05 GHz and less than or equal to 24.25 GHz. Such a frequency band allows the transmitting and receiving antennas 111 and 112 to be about several millimeters in size and in interval. Here, the interval between the transmitting and receiving antennas 111 and 112 means a gap size between the transmitting and receiving antennas 111 and 112.

Note that in Japan the frequency band may be used to acquire information selected from presence, location, movement and size of a target object such as a person or an object, and may be used without getting a license for a radio station. This sort of radio station is a radio station used for purposes other than ships or aircraft and is called "specified low power radio station for moving body detecting sensor" in Japan. The frequency band shown herein is merely an example, and may be changed as needed.

The high frequency circuit 110 is composed of one chip integrated circuit configured to monitor spatial information in accordance with the FMCW method. FIG. 1 shows the configuration example of the high frequency circuit 110. The high frequency circuit 110 includes the mixer circuit 1101 and a signal generator circuit 1102 as main components. Besides the abovementioned circuits, the high frequency circuit 110 includes a transmission amplifier circuit and a reception amplifier circuit. The high frequency circuit 110 may be composed of not only the one chip integrated circuit, but also two or more integrated circuits or discrete components.

The signal generator circuit 1102 is composed of a phase locked loop (PLL) synthesizer and configured to output an FMCW signal. The signal generator circuit 1102 will be provided with an operation instruction from the controller 12. Here, the FMCW signal is a signal whose frequency changes-descends linearly with time during the radiation period Ts. The controller 12 is configured to instruct the signal generator circuit 1102 whether or not to output the FMCW signal. The signal generator circuit 1102 is to output the FMCW signal as depicted by the reference sign Sg1 in FIG. 3. That is, the controller 12 will provide the signal generator circuit 1102 with an instruction on respective timing of the radiation period Ts and the idle period Tr. The varying ratio of frequency of the FMCW signal during the radiation period Ts is set to the detector 11 in the configuration example, but may be instructed from the controller 12 to the detector 11.

In the abovementioned configuration example, the FMCW signal is the signal whose frequency descends linearly with time during the radiation period Ts, but may be a signal whose frequency rises linearly with time. The FMCW signal may also be a signal having, during the radiation period Ts, a time period in which the frequency rises with time and a time period in which the frequency descends with time. The frequency need not necessarily vary linearly unlike the example shown in FIG. 3. That is, the detector 11 is configured to perform at least one of an operation for sweeping the frequency so that the frequency rises in a monotonic manner with time and an operation for sweeping the frequency so that the frequency descends in a monotonic manner with time.

When the transmitting antenna 111 is provided with the FMCW signal depicted by the reference sign Sg1 in FIG. 3, radio waves are radiated into the space from the transmitting antenna 111. On the other hand, the receiving antenna 112 converts radio waves received from the space into a reception signal depicted by the reference sign Sg2 in FIG. 3.

The mixer circuit 1101 is provided with the reception signal from the receiving antenna 112, and mixes the FMCW signal Sg1 from the signal generator circuit 1102 and the reception signal Sg2. The mixer circuit 1101 functions as a multiplier. Therefore, the mixer circuit 1101 is to output a signal obtained by multiplying the FMCW signal Sg1 and the reception signal Sg2. That is, the signal from the mixer circuit 1101 include the beat signal Sg3 having a difference between a frequency of radio waves radiated from the transmitting antenna 111 and a frequency of radio waves received through the receiving antenna 112.

The high frequency circuit 110 includes an analog-to-digital converter (hereinafter referred to as an "AD converter") 1103 in order to convert the signal from the mixer circuit 1101 into a digital signal. A filter circuit 1104 is provided between the mixer circuit 1101 and the AD converter 1103. The filter circuit 1104 is composed of a low-pass filter or a bandpass filter.

Components exclusive of the beat signal in the output signal of the mixer circuit 1101 are unwanted components for the detection of the target object and preferably removed as much as possible. The filter circuit 1104 is accordingly designed to remove unwanted frequency components for extraction of the beat signal from the output signal of the mixer circuit 1101.

In the configuration example shown in FIG. 1, a sampling frequency of the AD converter 1103 is set to a frequency two or more times an estimated frequency of the beat signal. The filter circuit 1104 is designed to exclude components exceeding one half of the sampling frequency of the AD converter 1103. The filter circuit 1104 will suppress components exceeding the Nyquist frequency of the output signal of the mixer circuit 1101 due to anti-aliasing. An actual filter circuit 1104 is designed to have an upper limit of a pass frequency band that is set to approximately 90% of the Nyquist frequency. The sampling frequency of the AD converter 1103 is determined based on the distance to a target object to be detected with the sensor 10, the radiation period Ts, the frequency sweep range Bw during the radiation period Ts, and the like.

For example, let the radiation period Ts be 1 [ms] and the sampling number per radiation period Ts be 25. These values are merely examples, and set based on movement velocity of the target object to be detected with the sensor 10, a range of distance from the target object to be detected, processing capacity of the processing device 13, and the like. Since the abovementioned conditions include the sampling frequency of 25 [kHz], the filter circuit 1104 is configured so that the pass frequency band thereof has an upper limit of approximately 11 [kHz].

The filter circuit 1104 as designed above will exclude components derive from an object Ob other than the target object, components as the sum of the frequency of the transmission waves and the frequency of the reflection waves, components as the FMCW signal, part of extraneous noise, and the like. Components of the FMCW signal as the transmission waves have a frequency higher than that of the beat signal, and the components as the sum of the frequency of the transmission waves and the frequency of the reflection waves also have a frequency higher than that of the beat signal. Accordingly, the filter circuit 1104 is to exclude these components. That is, the filter circuit 1104 contributes to the suppression of components other than the beat signal of the output signal of the mixer circuit 1101.

The AD converter 1103 is configured to receive a signal passing through the filter circuit 1104 of the output signal of the mixer circuit 1101 to convert an analog signal containing components of the beat signal into a digital signal. The AD converter 1103 is configured to output serial data. The processing device 13 is configured to receive, as the output signal of the detector 11, the digital signal from the AD converter 1103.

An output signal of the AD converter 1103 ordinarily needs to contain a signal having one cycle period or more per radiation period Ts in order that the processing device 13 analyzes a frequency of the output signal. The abovementioned conditions include 1 [kHz] as a lower limit of detectable frequencies from the output signal of the AD converter 1103. An upper limit of the detectable frequencies from the output signal of the AD converter 1103 is approximately 11 [kHz] in the abovementioned conditions, and restricted by the upper limit of the pass frequency band of the filter circuit 1104.

Setting the time length of the radiation period Ts and the sampling number as stated above enable computing the frequency spectrum of the output signal of the mixer circuit 1101 in a range of approximately 1 [kHz] to 11 [kHz]. Each of the domains of the frequency spectrum is set to have a width of a lower limit in a frequency range for an analysis object. Note that each of the domains of the frequency spectrum may be set to a width obtained by multiplying a power of two and the lower limit of the frequency range for the analysis object.

The processing device 13 includes a frequency analyzer 131 configured to compute a frequency spectrum of the output signal of the filter circuit 1104. The frequency analyzer 131 will find a frequency of the beat signal based on the digital signal from the AD converter 1103. That is, the frequency analyzer 131 is configured to receive the output signal of the AD converter 1103 to apply a discrete Fourier transform (DFT) to the output signal. It is assumed that the discrete Fourier transform herein is a basic DFT operation. However, the DFT operation may be speeded up as a fast Fourier transform (FFT).

The frequency analyzer 131 outputs the frequency spectrum of the output signal of the AD converter 1103. That is, the frequency analyzer 131 outputs respective power in the domains (frequency bins) into which a frequency range of an input signal of the AD converter 1103 is divided. The frequency analyzer 131 computes the frequency spectrum per radiation period Ts. In other words, the frequency spectrum is obtained per cycle period T0.

The processing device 13 includes a determination processor 132 configured to determine whether or not the target object is present based on the frequency spectrum from the frequency analyzer 131. When the frequency spectrum from the frequency analyzer 131 satisfies predetermined conditions, the determination processor 132 determines that the target object is present in the monitoring region that is set to a predetermined range from the sensor 10. The processing device 13 also includes an output interface 133 configured to output a control signal based on a determination result by the determination processor 132. When the determination processor 132 outputs a signal representing the presence of the target object in the monitoring region, the output interface 133 outputs the control signal.

The determination processor 132 determines a boundary of the monitoring region based on the distance from the sensor 10. That is, the boundary of the monitoring region is determined based on an upper limit of the distance from the sensor 10, a lower limit of the distance from the sensor 10, or both the upper and lower limits of the distance from the sensor 10. The distance as the boundary of the monitoring region is set to the determination processor 132. The processing device 13 is preferably configured to allow a user to set the distance as the boundary of the monitoring region. For example, the processing device 13 is provided with an interface with an external device, and is configured to communicate with a setting device through the interface. The setting device is selected from a dedicated setting device, a general-purpose personal computer, a smartphone, a tablet terminal and the like.

Here, let the lower limit of the frequency range for the analysis object of the frequency analyzer 131 be 1 [kHz]. In this example, the domains (frequency bins) having the lower limit of the frequency range for the analysis object are set to be greater than or equal to 1 [kHz] and less than 2 [kHz], greater than or equal to 2 [kHz] and less than 3 [kHz], and the like. Alternatively, the domains having the width obtained by multiplying the power of two and the lower limit of the frequency range for the analysis object are set to be greater than or equal to 1 [kHz] and less than 2 [kHz], greater than or equal to 2 [kHz] and less than 4 [kHz], and the like.

As stated above, the distance R to the object Ob from the sensor 10 is represented by R=k·Δf, where Δf is a difference between the frequency of the transmission waves and the frequency of the reflection waves and k is a coefficient determined based on the specification of the sensor 10. The coefficient k is 1×10⁻³ [m·s] when the frequency sweep range Bw during the radiation period Ts is 150 [MHz]. A minimum value for recognition of frequency difference Δf is 1 [kHz] when each width of the frequency bins is 1 [kHz]. From application to R=k·Δf, a measurable minimum amount of the distance D to the object Ob from the sensor 10 is 1 [m].

It is considered that the coefficient k would be decreased in order to decrease the measurable minimum amount of distance-namely at least one of making the radiation period Ts shorter than 1 [ms] and making the frequency sweep range Bw during the radiation period Ts greater than 150 [MHz]. In short, it is considered that the measurable minimum amount of distance would be decreased by decreasing the varying ratio of frequency (Bw/Ts).

However, decreasing the radiation period Ts causes an increase in the lower limit of measurable distance because the lower limit of the frequency range for the analysis object increases. On the other hand, the frequency sweep range Bw during the radiation period Ts is technically possible but is subjected to legal restrictions, thereby making its implementation difficult. For example, the frequency sweep range Bw is not allowed to exceed 200 [Mhz] in 24 GHz band in Japan.

The processing device 13 therefore performs the zero padding stated above. A corrector 134 disposed ahead of the frequency analyzer 131 in the processing device 13 is configured to perform the zero padding processing. That is, the processing device 13 will perform the zero padding processing to increase the number of the frequency bins in the frequency spectrum. The zero padding processing herein means filling a difference with zeros as high-order bits, where the difference is a difference between the bit-number of the AD converter 1103 (on an output side thereof) and the bit-number of the frequency analyzer 131 on an input side thereof, and the number of the zeros is equal to the difference.

In an example, let the bit-number of the AD converter 1103 on the output side be 5-bit, and let the bit-number of the frequency analyzer 131 on the input side be 10-bit. In this case, when an output value of the AD converter 1103 is "10011", five zeros are added to the output value as the high-order bits by the zero padding processing . That is, the zero padding processing is applied to the output value of the AD converter 1103, thereby providing the frequency analyzer 131 with "0000010011".

A detectable minimum amount of distance is determined by widths of the frequency bins from the frequency analyzer 131. Therefore, the detectable minimum distance becomes smaller as the bit-number of the frequency analyzer 131 on the input side is larger. However, the information content is not increased in the zero padding processing. Therefore, as the difference between the bit-number of the AD converter 1103 on the output side and the bit-number of the frequency analyzer 131 on the input side is larger, an error by the zero padding processing becomes larger. Accordingly, the bit-number of the frequency analyzer 131 on the input side has a permissible range, an upper limit of which is approximately 10 times the bit-number of the AD converter 1103 on the output side.

The bit-number of the frequency analyzer 131 on the input side is selected from 128-bit and 256-bit in general. In this configuration example, the bit-number of the AD converter 1103 on the output side is 25-bit, and the bit-number after the zero padding processing is increased about five times or ten times. If the bit-number of the frequency analyzer 131 on the input side is ten times the bit-number of the AD converter 1103 on the output side, each width of the frequency bins becomes one tenth. Therefore, if the sensor 10 is configured to perform quadrature detection with the abovementioned values applied thereto, the configuration enables a decrease from 1 [m] up to 10 [cm] in the detectable minimum amount of distance by the sensor 10.

The processing device 13 described above is composed of a microcontroller together with the controller 12. The microcontroller is composed of a one chip device that includes a processor configured to operate according to a program and a memory device including a working memory and a memory storing the program for operating the processor

The controller 12 and the processing device 13 may be composed of not only the microcontroller but also a device selected from a field-programmable gate array, a digital signal processor, a peripheral interface controller and the like. Alternatively, the controller 12 and the processing device 13 may include a processor such as a central processing unit (CPU) and a memory device provided separately from the processor. The controller 12 and the processing device 13 may be composed of processors provided separately without being shared.

The program may be provided through not only a read only memory (ROM) in the memory device, storing the program, but also through a computer readable storage medium such as an optical disk or an external storage device. Alternatively, the program may be provided through a telecommunications network such as the Internet. The program provided through the storage medium or the telecommunications network without being stored in the ROM is to be stored in a readable nonvolatile storage.

Processing performed by the processing device 13 has a large load by processing such as the DFT operation or the FFT operation, and takes a relatively long time to the processing. Accordingly, the main processing by the processing device 13 is performed during a time period of the cycle period T0 other than the radiation period Ts. That is, when the beat signal Sg 3 obtained during the radiation period Ts is provided to the processing device 13, the processing device 13 performs frequency analysis of the beat signal and then determines whether or not the target object is present, during the idle period Tr before the next radiation period Ts. Note that when once outputting the control signal, the output interface 133 keeps outputting the control signal until a judgement result based on the beat signal Sg3 to be obtained during at least the next radiation period Ts is obtained. An output maintaining condition of the control signal by the output interface 133 is not subject and therefore explanation thereof is omitted.

As stated above, the sensor 10 performs the zero padding, thereby enabling reduction by about one-tenth in the detectable minimum amount of distance. Therefore, the sensor 10 can be applied to various uses by changing part of the configuration. Note that the radiation period Ts, the idle period Tr and the frequency sweep range may be changed according to the intended use.

The determination processor 132 may be configured to not only determine whether or not a target object is present in the monitoring region but also output a signal representing the distance to the target object from the sensor 10. Alternatively, the determination processor 132 may be configured to output only the signal representing the distance to the target object from the sensor 10.

In the configuration example described above, the determination processor 132 determines whether or not a target object is present in the monitoring region based on the frequency spectrum computed with the frequency analyzer 131 and outputs a signal representing a determination result. A judgement condition of the presence of a target object in the monitoring region is basically determined by the distance to an object Ob from the senor 10. When no object Ob is normally present in a region, the region is defined as the monitoring region and thereby an object Ob present in the monitoring region can be determined as the target object.

Specifically, the determination processor 132 extracts a frequency bin having a peak value in the frequency spectrum computed with the frequency analyzer 131 and determines the presence of an object Ob at distance corresponding to the frequency bin extracted. That is, if a peak occurs in a frequency bin in a range of the monitoring region, the determination processor 132 determines the presence of an object Ob in the monitoring region. Here, the frequency spectrum is not limited to a unimodal type having only one peak, but may have two or more peaks. However, if a frequency bin(s) having the peaks is(are) in the range of the monitoring region, the determination processor 132 determines the presence of an object Ob in the monitoring region.

In order to measure the distance to the object Ob from the sensor 10, the configuration example described above regards half of time from radiation of the transmission waves to reception of the reflection waves as time it takes for radio waves to reach an object Ob. Therefore, a region recognized by the sensor 10 as constant distance from the sensor 10 in the space is in fact a region on the surface of an ellipsoid of revolution, at an origin of which the transmitting and receiving antennas 111 and 112 are disposed.

Note that a ratio between a short diameter and a long diameter in the ellipsoid of revolution is approximately 1 because the distance to the monitoring region from the sensor 10 is sufficiently longer than the interval between the transmitting and receiving antennas 111 and 112-about several millimeters. Therefore, the monitoring region can approximately be regarded as part of a region between two large and small spheres whose center is a midpoint between the transmitting and receiving antennas 111 and 112. For example, a region of the region between the spheres, included in a predetermined solid angle with the center being the midpoint between the transmitting and receiving antennas 111 and 112 may be defined as the monitoring region.

As stated above, the transmission waves radiated into the space from the transmitting antenna 111 are reflected by an object Ob, and the reflection waves as a result of reflection of the transmission waves are received with the receiving antenna 112, and thereby the distance to the object Ob is measured based on the beat signal Sg3. When the distance measured is included in the monitoring region, the output interface 133 of the processing device 13 outputs a control signal. Therefore, utilizing the control signal for device control enables activation of the device according to the presence or absence of an object Ob in the monitoring region. The embodiment may be applied to not only such a device control use but also a monitoring use of object Ob intrusion into the monitoring region.

Note that there is a high possibility that radio waves received with the receiving antenna 112 is not the reflection waves from the monitoring region when a reception signal from the receiving antenna 112 has a weak value (power value). Therefore, when the reception signal from the receiving antenna 112 has a weak value that is less than a reference value, the reception signal is preferably excluded from target processing of the controller 12. That is, it is preferable that the detector 11 or the controller 12 be provided with a component configured to compare a value of the reception signal with the reference value to exclude the reception signal having a value less than the reference value from target processing thereof.

The sensor 10 configured as described above detects an object Ob through radio waves, thereby making it possible to detect an object Ob without being influenced by ambient light, or color or temperature of the object Ob, and detect objects Ob made of various materials. Radio waves in the band from microwave to millimeter wave are employed and it is therefore possible to detect even a comparatively small object Ob.

Moreover, performing the zero padding processing before computing the frequency spectrum enables reduction in the detectable minimum amount of distance regardless of the configuration in which radio waves are intermittently radiated and each radiation period Ts is a comparatively short time period. That is, the sensor 10 is configured to intermittently radiate radio waves, and makes it possible to detect an object Ob present at comparatively close distance.

For example, even when the radiation period Ts is a short time period such as 1 [ms] like the abovementioned configuration example, the corrector 134 suitably performs the zero padding, thereby enabling measurement of distance with the measurable minimum amount-increment being, e.g., approximately 20cm. It is therefore possible to detect, with a comparatively short amount of distance, an object Ob moving at a comparatively low velocity (e.g., approximately 2 m/s) in a close range that allows the transmission waves radiated to be received as the reflection waves (e.g., within 2m from the sensor 10).

It is also possible to detect a target object based on distance to an object Ob by radiating radio waves whose frequency varies with time to measure the distance to the object Ob from the sensor 10 based on a frequency of a beat signal having a frequency difference between reflection waves and transmission waves. That is, it is possible to detect the object Ob based on information on the distance that is not acquired by a Doppler method.

The configuration example described above measures the distance to an object Ob based on a frequency of a frequency bin having a power peak value in the frequency spectrum. Therefore, the measurable minimum amount of distance depends on the widths of the frequency bins. That is, in the configuration example described above, a peak frequency corresponding to the power peak value includes an error corresponding to a width of the frequency bin. In order to make the peak frequency approach a true value, the calculator 135 may perform processing below.

That is, it is preferable that the calculator 135 perform curve fitting with respective power of three or more frequency bins including the frequency bin having the power peak value to define a frequency corresponding to a peak in the curve as the peak frequency. If power is obtained from each of at least three frequency bins, it is possible to apply them to quadratic curve fitting in general. The calculator 135 is therefore able to obtain the peak frequency by finding a peak value of the quadratic curve after the fitting. In addition, if power is obtained from each of at least five frequency bins, it is possible to apply them to curve fitting with an interpolation method such as Lagrange interpolation. The calculator 135 performs the processing, thereby making it possible to increase distance resolution more than the measurable minimum amount of distance determined by the width of the frequency bin.

### (Configuration Example 2 of Sensor)

When the values explained in the abovementioned configuration example are applied to a sensor 10, the zero padding processing enables the sensor 10 to measure distance to an object Ob with a measurable minimum amount of approximately 20 [cm]. However, such a measurable minimum amount may need to be further decreased depending on an intended use of the sensor 10. It is considered that the measurable minimum amount would further be decreased by increasing the number of zeros added to data into a frequency analyzer 131. This however causes a problem of an increase in load of a processing device 13 as a result of an increase in a bit-number of the frequency analyzer 131 on an input side thereof.

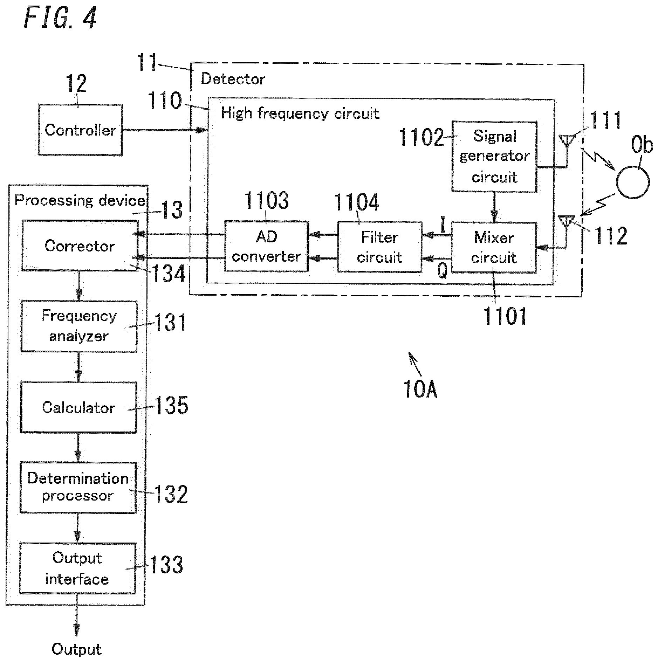

Therefore, a sensor 10A shown in FIG. 4 will further decrease a detectable minimum amount of distance through a quadrature detection method in addition to a corrector 134 configured to perform a zero padding processing.

The mixer circuit 1101 of the sensor 10 shown in FIG. 1 sends out one output signal, whereas the sensor 10A shown in FIG. 4 includes a mixer circuit 1101 configured to send out two output signals. The mixer circuit 1101 has two circuits which are separated in the inside thereof, and each of which is configured to receive a reception signal from a receiving antenna 112. A first circuit thereof will mix the reception signal and an FMCW signal, while a second circuit will shift a phase of the FMCW signal by 90 degrees to produce a phase-shifted signal to mix the reception signal and the phase-shifted signal. The phase of the phase-shifted signal may be ahead of or behind the phase of the FMCW. It is needed that when the signal mixed with the reception signal in one of the two circuits is a sine wave signal, the signal mixed with the reception signal in the other is a cosine wave signal.

As stated above, the mixer circuit 1101 having the two circuits mixes the reception signal and each of the signals whose phases are different for each circuit, thereby outputting two types of signals with different phases. The two types of signals include respective beat signals. The two types of beat signals are obtained by mixing the reception signal corresponding to reflection waves and signals whose phases are different by 90 degree from the reception signal, and therefore have a phase difference of 90 degrees. Thus, obtaining the two types of beat signals from the reception signal corresponding to the reflection waves is called quadrature detection. Hereinafter, one of the two types of beat signals is called an I signal, while the other of the two types of beat signals is called a Q signal. The I and Q signals have different phases, but have the same frequency.

In the configuration example shown in FIG. 4, since the I and Q signals are output as the two types of signals from the mixer circuit 1101, an AD converter 1103 also includes two circuits that are configured to output respective two digital signals corresponding to the I and Q signals. The two types of digital signals corresponding to the I and Q signals from the AD converter 1103 will be provided to a processing device 13.

The processing device 13 includes a frequency analyzer 131 that is configured to perform DFT processing with the I and Q signals. That is, the frequency analyzer 131 will regard the I and Q signals as orthogonal functions to perform complex calculation as DFT processing. This configuration enables the frequency analyzer 131 to easily perform the DFT processing.

Regarding the two types of signals-the I and Q signals as the orthogonal functions to perform the DFT processing enables decreasing the measurable minimum amount of distance to a quarter of that obtained by computing the frequency spectrum with a single signal. That is, four types of information are acquired per cycle period by combining the two signals having the phase difference of 90 degrees. It is consequently possible to measure distance per quarter cycle. Note that DFT may be replaced with FFT. However, the sampling number during the radiation period Ts needs to be changed because the sampling number in FFT must be a power of 2.

The configuration example shown in FIG. 4 is combined with the zero padding processing in which the bit-number of the frequency analyzer 131 on the input side is increased approximately ten times, thereby making it possible to decrease the detectable minimum amount of distance to approximately 5 [cm]. Other components and operations are similar to those of the configuration example shown in FIG. 1.

### (Configuration Example 3 of Sensor)

The abovementioned configuration examples allow the output interfaces 133 to output their respective control signals even when an object Ob stays still in a monitoring region. There is therefore a possibility that the output interfaces 133 will output their respective control signals in response to an object Ob other than a target object depending on installation environment of the sensors 10.

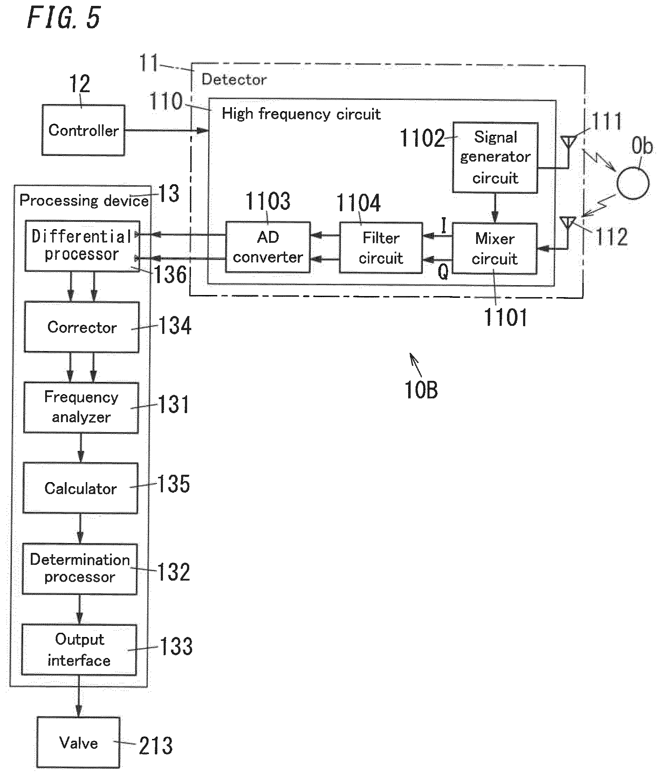

Therefore, a sensor 10B shown in FIG. 5 will detect a moving object Ob as a target object. The sensor 10B shown in FIG. 5 further includes a differential processor 136 that is added to a processing device 13 like the sensor 10A shown in FIG. 4. In the sensor 10B shown in FIG. 5, the differential processor 136 is disposed ahead of a frequency analyzer 131 with a corrector 134 provided between the differential processor 136 and the frequency analyzer 131. The differential processor 136 is configured to calculate a difference between respective values of two beat signals derived from two radiation periods Ts with time difference. In this configuration example, a bit-number of the differential processor 136 on an output side thereof accords with a bit-number of an AD converter 1103 on an output side thereof.

The differential processor 136 includes a register configured to temporarily store an output value of the AD converter 1103, and an arithmetic unit configured to calculate a difference between a latest output value of the AD converter 1103 and the output value of the AD converter 1103 previously stored in the register. The difference calculated through the differential processor 136 is to be provided to the frequency analyzer 131. Subsequent processing is the same as that of the configuration example shown in FIG. 1.

When the AD converter 1103 receives reflection waves from a stationary object Ob, the output thereof hardly changes during each cycle period T0. Therefore, beat signals Sg3 corresponding to the reflection waves from the stationary object Ob hardly influence the output value of the differential processor 136. Therefore, providing the output value of the differential processor 136 to the frequency analyzer 131 enables suppressing occurrence of a peak in a frequency bin corresponding to the stationary object Ob.

That is, the sensor 10B with the differential processor 136 excludes the stationary object Ob from the target object. In other words, only an object Ob entering the monitoring region or moving in the monitoring region is detected as the target object. Thus, when the target object is present in the monitoring region, an output interface 133 outputs a control signal. Note that when the differential processor 136 is provided on the front side of the frequency analyzer 131, it is possible to reduce a processing load of the frequency analyzer 131 by excluding, from target processing, processing when a value of power from the differential processor 136 is less than a reference value.

The differential processor 136 is provided on the front side of the frequency analyzer 131 in the abovementioned configuration example, but may be provided on the rear side of the frequency analyzer 131. In this case, the differential processor 136 is configured to calculate a difference between frequency spectra computed through the frequency analyzer 131, thereby calculating a difference between respective power per frequency bin to output each difference calculated. When an object moves slowly, peaks occur in frequency bins in a narrow frequency range, while when an object moves fast, peaks occur in a wide frequency range. This theory enables obtaining degree of velocity of a moving object Ob based on peak positions.

In the abovementioned operation example, the differential processor 136 computes information difference between adjoining two cycle periods T0, but the cycle periods T0 for computing the information difference may be far from each other. That is, the differential processor 136 may compute information difference between a latest cycle period T0 and a cycle period T0 predetermined cycle periods earlier than the latest cycle period T0. For example, the differential processor 136 may compute information difference between the latest cycle period T0 and a cycle period T0 ten cycle periods earlier than the latest cycle period T0. Alternatively, the differential processor 136 may compute information difference between a cycle period on activation and a latest cycle period. In short, the differential processor 136 needs to be configured to exclude objects Ob staying still from a processing object according to an intended use. Other components and operations of Configuration Example 3 shown in FIG. 5 are similar to those of Configuration Example 2 shown in FIG. 4. Technology of the differential processor 136 explained in Configuration Example 3 may be combined with the configuration example shown in FIG. 1.

### (Faucet Device)

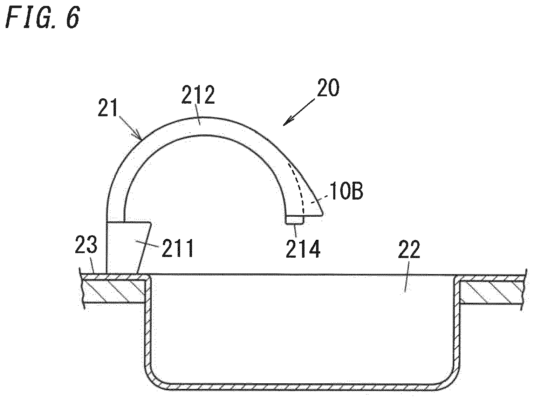

A faucet device 20 as an application example of the sensor 10B will hereinafter be explained with reference to FIG. 6. The faucet device 20 to be explained below is combined with a sink 22 for kitchen, and includes a water faucet 21 configured to be disposed on a counter 23 in which the sink 22 is recessed. The sensor 10 is integrally attached to the water faucet 21. Technology of Configuration Example 2 and technology of Configuration Example 3 are applied to the sensor 10B of the faucet device 20. That is, the sensor 10B has the configuration shown in FIG. 5.

The water faucet 21 includes a base 211 configured to be fixed in position on the counter 23 with the base protruding from an upper surface of the counter 23, and a spout 212 configured to rotate around the base 211, parallel to the upper surface of the counter 23. Respective insides of the base 211 and the spout 212 are connected to form a channel for water (or hot water). The base 211 is equipped with a valve 213 (see FIG. 5) configured to selectively open and close the channel. The valve 213 includes a solenoid valve that is configured to open and close the channel according to a control signal from the sensor 10B. That is, the sensor 10B provides the control signal to the valve 213, thereby causing water faucet 21 to turn on and off to control flow of water.

In the configuration example shown in FIG. 6, the sensor 10B is disposed near an outlet 214 at a tip of the spout 212. A monitoring region of the sensor 10B is set to the vicinity of the outlet 214 so that when a target object enters the monitoring region, the sensor 10B outputs a control signal forcing the valve 213 to open. Specifically, arrangement of transmitting and receiving antennas 111 and 112 and setting conditions of a determination processor 132 are determined such that a region just under the outlet 214 and a periphery region thereof are the monitoring region. Therefore, when a target object such as hands, the dishes, cooking tools, vegetables and fruit approaches the outlet 214, the valve 213 opens to allow water to flow.

On the other hand, when the sensor 10B detects no target object, the sensor 10B outputs a control signal forcing the valve 213 to close. Therefore, when the target object leaves the outlet 214, the valve 213 closes to stop water from flowing. Note that the valve 213 is preferably a latching solenoid valve configured to maintain On and Off states without power after being selectively turned on and off, respectively. The latching solenoid valve is merely one example, and the valve 213 is not limited thereto as long as it includes a solenoid valve.

In the sensor 10B of the faucet device 20, a range from about several centimeters to 50 centimeters with respect to the sensor 10B is defined as the monitoring region. Respective locations of the transmitting and receiving antennas 111 and 112 are often different from a location of the outlet 214 in a water flowing direction from the outlet 214. The distance between the locations of the transmitting and receiving antennas 111 and 112 and the location of the outlet 214 is generally set to about several centimeters.

Therefore, when the starting point of the monitoring region is the outlet 214, the monitoring region whose starting point is the sensor 10B needs correction of about several centimeters. That is, in order to change the starting point of the monitoring region to the outlet 214, a correction amount needs to be subtracted from the distance determining the monitoring region whose starting point is the sensor 10B. In other words, when the starting point is the sensor 10B, distance up to the monitoring region includes the correction amount corresponding to a difference between respective locations of the outlet 214 and the sensor 10B.

For example, it is assumed that the transmitting and receiving antennas 111 and 112 of the sensor 10B are 6 [cm] above the outlet 214 of the water faucet 21. In this case, the distance from the sensor 10B to a monitoring region is equal to an amount obtained by adding a correction amount of 6 [cm] to the distance from the outlet 214 to the monitoring region. For example, when the monitoring region is set to a range of greater than or equal to 10 [cm] and less than or equal to 30 [cm] with respect to the sensor 10B, if the correction amount is 6 [cm], the distance to the monitoring region from the outlet 214 is a range of greater than or equal to 4 [cm] and less than or equal to 24 [cm].

With the faucet device 20 explained herein, as long as the monitoring region of the sensor 10B is appropriately set, it is possible to suppress the occurrence of false detection of a bottom of the sink 22 as the target object. However, when a stationary object(s) to be washed is(are) in the sink 22, the stationary object(s) may be falsely detected as a target object(s), thereby allowing water to flow. On the other hand, the target object to be detected with the sensor 10B of the faucet device 20 is hands, the dishes, cooking tools, vegetables and fruit, and also is an object Ob moving at a relative speed of about several centimeters per second to 1 meter per second with respect to the sensor 10B. Therefore, distinguishing a moving object Ob and a stationary object Ob enables suppressing the occurrence of false detection of the stationary object(s) in the sink 22 as the target object(s). Therefore, the faucet device 20 for kitchen is provided with the sensor 10B including a differential processor 136.

The abovementioned sensor 10B is not limited to the faucet device 20 for kitchen, but may be applied to a water faucet 21 for lavatory or bath. The sensor 10B is in the vicinity of the outlet 214, but not limited to this. The sensor 10B may be apart from the outlet 214 or provided for the base 211 of the water faucet 21. Alternatively, the sensor 10B may be provided for a face washbowl or a hand washbowl.

The faucet device 20 is not only configured so that the water faucet 21 combined with the sink 22 is provided with the sensor 10B, but also configured so that the valve 213 is disposed in a supply channel to a lavatory pan, a shower or a bath. Note that operations of the determination processor 132 and the output interface 133 are designed in accordance with an intended use of the faucet device 20. That is, spatial information detected with the sensor 10B is associated with the operation of the valve 213 in accordance with an intended use of the faucet device 20.

The abovementioned sensor 10B may be applied to not only the configuration for selectively turning on and off the water faucet 21, but also the configuration as a noncontact switch for selectively activating and deactivating a device. The sensor 10B may also be applied to the configuration as a monitoring device for monitoring a person passing through an entrance of a building as a motion detector configured to detect the presence of a person in a short distance range.

In the configuration explained herein, the sensor 10B is applied to the faucet device 20, but the embodiment is not limited thereto. The sensor 10 or 10A may be applied to the faucet device 20.

Note that the abovementioned embodiment is merely one example. Therefore, the present invention is not limited to the embodiment, but even various modifications other than the embodiment may be made therein according to design concept or the like without departing from the scope of technical ideas of the present invention.

### (Schema)

As described above, a sensor (10, 10A, 10B) according to a first aspect includes a detector (11) and a processor device (13). The detector (11) is configured to radiate radio waves whose frequency varies with time into space and receive radio waves from the space. The processor device (13) is configured to measure distance to an object Ob in the space based on a difference between a frequency of the radio waves radiated from the detector (11) and a frequency of the radio waves received with the detector (11). The detector (11) includes an analog-to-digital converter (AD converter 1103) configured to output a digital value of a beat signal having the difference between the frequency of the radio waves radiated and the frequency of the radio waves received. The detector (11) is configured to repeatedly operate according to a cycle period T0 that contains a radiation period Ts allowing the detector to radiate radio waves and an idle period Tr prohibiting the detector from radiating radio waves, thereby intermittently radiating radio waves. The processor device (13) includes a frequency analyzer (131), a corrector (134) and a calculator (135). The frequency analyzer (131) has a bit-number on an input side thereof larger than a bit-number of the AD converter (1103) on an output side thereof, and is configured to compute a frequency spectrum of the beat signal. The corrector (134) is configured to add zeros to the digital value provided to the frequency analyzer (131). The number of the zeros is equal to a difference between the bit-number of the AD converter (1103) on the output side and the bit-number of the frequency analyzer (131) on the input side. The calculator (135) is configured to find a peak frequency corresponding to a power peak value from the frequency spectrum computed with the frequency analyzer to convert the peak frequency into the distance to the object.

This configuration enables enhancement of frequency resolution of the frequency analyzer (131) because in order to compute the frequency spectrum, the zeros are added to data to be provided to the frequency analyzer (131), thereby increasing a bit-number to be provided to the frequency analyzer (131). That is, increasing the bit-number of the frequency analyzer (131) on the input side more than the bit-number of the detector (11) on the output side enables enhancement of the frequency resolution when compared with a frequency spectrum corresponding to the bit-number of the detector (11) on the output side. It is consequently possible to decrease a measurable minimum amount of distance to be measured based on the frequency of the beat signal when compared with no correction by the corrector (134).

In addition, the configuration enables the sensor (10, 10A, 10B) to compute a frequency spectrum of a beat signal per cycle period T0 because radio waves are intermittently radiated into the space per cycle period T0. That is, when the distance to the object Ob changes with time, it is possible to track a change of the distance to the object Ob at time intervals of the cycle period T0 at a minimum.

In the first aspect, as a sensor (10, 10A, 10B) according to a second aspect the calculator (135) may be configured to find a curve corresponding to three or more frequency bins including a frequency bin corresponding to the power peak value in the frequency spectrum of the beat signal, define a frequency corresponding to a peak value of the curve as the peak frequency, and convert the peak frequency into the distance to the object Ob.

This configuration enables measuring the distance to the object Ob with higher precision than the measurable minimum amount of distance determined by widths of the frequency bins.

In a first or second aspect, as a sensor (10B) according to a third aspect the processor device (13) includes a differential processor (136) configured to calculate a difference between respective values of two beat signals derived from two radiation periods Ts with time difference. The processor device (13) is configured to provide the frequency analyzer (131) with an output value of the differential processor (136).

With configuration, the differential processor (136) outputs different component between the values of two beat signals derived from two radiation periods Ts with time difference. Therefore, two beat signals derived from a stationary object Ob cancel each other. In other words, the output value of the differential processor (136) corresponds to component reflected by a moving object OB. This therefore enables the sensor (10) to detect the moving object Ob as a target object.

In a first or second aspect, as a sensor (10B) according to a fourth aspect the processor device (13) may include a differential processor (136) configured to calculate a power difference per frequency bin between two frequency spectra computed with the frequency analyzer (131) from two beat signals derived from two radiation periods Ts with time difference. In this case, the processor device (13) is configured to provide the calculator (135) with output values of the differential processor (136).

With the configuration, the differential processor (136) outputs a difference between the two frequency spectra derived from the two radiation periods Ts with time difference. Therefore, both power per frequency bin derived from a stationary object Ob cancels each other. In other words, the output value of the differential processor (136) corresponds to frequency component reflected by a moving object OB. This enables the sensor (10B) to detect the moving object Ob as a target object. In addition, the differential processor (136) calculates a difference between the two frequency spectra. There is therefore a possibility that a hardware resource such as a memory would be omitted when compared with a difference between digital values before frequency analysis.

In a third or fourth aspect, as a sensor (10B) according to a fifth aspect one of the two radiation periods Ts is a radiation period Ts in a latest cycle period Ts while the detector 11 is operating, and another of the two radiation periods Ts is a radiation period Ts in a cycle period T0 when the detector (11) starts operating.

This configuration extracts a change to the environment at a point in time when the detector (11) starts operating. Even if an object Ob is not detected at the point in time when the detector (11) starts operating, the object Ob can be detected.

In a third or fourth aspect, as a sensor (10B) according to a sixth aspect one of the two radiation periods Ts is a radiation period Ts in a latest cycle period T0 while the detector (11) is operating, and another of the two radiation periods Ts is a radiation period Ts in a cycle period T0 before a predetermined number of radiation periods than the latest cycle period while the detector (11) is operating.

This configuration extracts a change to the environment in the cycle period T0 before the predetermined number of radiation periods than the latest cycle period while the detector (11) is operating. Even if gradual change with time occurs in the environment or the operation of the sensor 10B, it is possible to prevent false detection of an object Ob. That is, when the environment gradually changes with time, or when the operation of the sensor 10B gradually changes according to a temperature change of the sensor 10B or degradation of the sensor 10B, it is possible to prevent such change from being detected as an object Ob.

In any one of the first to sixth aspects, as a sensor (10A) according to a seventh aspect the detector (11) is configured to output, as the beat signal, two beat signals that are 90 degrees out of phase by quadrature detection with respect to a reception signal derived from the radio waves received from the space. The corrector (134) is configured to add the zero to each of two digital values provided to the frequency analyzer (131) according to the two beat signals. The frequency analyzer (131) is configured to receive output values of the corrector (134), obtained by adding the zeros to each of the two digital values and perform one of a discrete Fourier transform (DFT) and a fast Fourier transform (FFT).

That is, the frequency analyzer (131) is configured to perform complex calculation, thereby reducing the measurable minimum amount of distance by a quarter when compared with perform no complex calculation.

In any one of the first to seventh aspects, as a sensor (10, 10A, 10B) according to an eighth aspect the detector (11) is preferably selected from three types of configurations below. In a first configuration, the detector is configured to perform frequency sweep so that the frequency of the radio waves radiated into the space increases in a monotonic manner with time. In a second configuration, the detector is configured to perform frequency sweep so that the frequency of the radio waves radiated into the space decreases in a monotonic manner with time. In a third configuration, the detector is configured to perform frequency sweep so that time periods in which the frequency of the radio waves radiated into the space respectively increases and decreases in a monotonic manner with time are included.

The frequency during the radiation period Ts changes by selecting any one of the three configuration. If the distance to the object OB does not change, a beat signal having a constant frequency is obtained during the radiation period Ts. That is, it is possible to analyze a frequency of a beat signal per radiation period Ts.

In any one of the first to eighth aspects, as a sensor (10, 10A, 10B) according to an eighth aspect the calculator (135) is preferably configured to be prohibited from measuring the distance when the power peak value in the frequency spectrum does not exceed a threshold.

With this configuration, it is possible to suppress the occurrence of a false detection of little noise as the presence of an object Ob when no object Ob reflecting the radio waves is present.

In any one of the first to ninth aspects, as a sensor (10, 10A, 10B) according to a tenth aspect the processing device (13) preferably includes a determination processor (132) configured to determine whether or not the object is present in a range of a monitoring region defined based on the distance, and an output interface (133) configured to output a control signal for device control in accordance with a determination result by the determination processor (132).

This configuration enables device operation control according to the output of the control signal from the output interface (133) in response to a determination result by the determination processor (132). For example, in a faucet device (20) to be explained below, the control signal enables a valve (213) (see FIG. 5) as a device to be controlled to open and close. When a device to be controlled is an alarm device, it is possible to activate the alarm device when the sensor (10, 10A, 10B) detects the presence of a person in a monitoring region. A device to be controlled by the control signal from the sensor (10, 10A, 10B) is not limited to the examples. A relation between the determination result by the determination processor (132) and the control signal from the output interface (133) may be appropriately determined. The output interface (133) may selectively output not only two types of control signals such as On and Off but also three of more types of control signals. Alternatively, the output interface (133) may output a control signal whose value continuously varies according to the distance to an object Ob.

In the tenth aspect, as a sensor (10, 10A, 10B) according to an eleventh aspect the determination processor (132) preferably has a function of determining that the object present in the range of the monitoring region defined based on the distance is a target object. The determination processor has distance that is set as a boundary of the monitoring region.

That is, the sensor (10, 10A, 10B) is configured to measure distance, thereby enabling the determination processor (132) to determine that the object present in the range of the monitoring region defined based on the distance is the target object. Since the determination processor (132) has the distance that is set as the boundary of the monitoring region, it is possible to determine the range of the monitoring region by setting the distance of the determination processor (132). For example, when only an upper limit of the distance is set as the boundary of the monitoring region, the sensor (10, 10A, 10B) detects as the target object an object Ob at a position nearer than the upper limit of the distance. When only a lower limit of the distance is set as the boundary of the monitoring region, the sensor (10, 10A, 10B) detects as the target object an object Ob at a position farther than the lower limit of the distance. When upper and lower limits of the distance are set as the boundary of the monitoring region, the sensor (10, 10A, 10B) detects as the target object an object Ob at a position closer than the upper limit of the distance and farther than the lower limit of the distance.

A faucet device (20) according to a twelfth aspect includes a sensor (10, 10A, 10B) of a tenth or eleventh aspect, and a water faucet (21) configured to receive the control signal and then turn on and off to control flow of water. The processing device (13) is configured to provide the water faucet (21) with a turn-on signal as the control signal to allow water to flow when the target object is present in the monitoring region, and provide the water faucet (21) with a turn-off signal as the control signal to stop the water from flowing when the target object is not present in the monitoring region.

The configuration enables the sensor (10, 10A, 10B) to control to turn on and off the water faucet (21). Therefore, the water faucet (21) turns on to allow water to flow when the target object is present in the monitoring region, and also turns off to stop water from flowing when the target object leaves the monitoring region. It is accordingly possible to automatically turn on and off the water faucet (21) without performing operation of a lever or the like. that is, it is possible to suppress unnecessary flow of water from the water faucet (21), thereby contributing to water saving.

In the eleventh aspect, as a faucet device (20) according to a twelfth aspect the sensor (10, 10A, 10B) is integrally attached to the water faucet (21). That is, the faucet device (20) integrally including the sensor (10, 10A, 10B) and the water faucet (21) is provided as goods. Without changing components other than the water faucet (21), the water faucet (21) is substituted for an existing water faucet (21), thereby enjoying the merit of the faucet device (20).

### Reference Signs List

- 10, 10A, 10B: Sensor
- 11: Detector
- 13: Processing device
- 20: Faucet device
- 21: Water faucet
- 131: Frequency analyzer
- 132: Determination processor
- 133: Output interface
- 134: Corrector
- 135: Calculator
- 136: Differential processor
- 1103: AD converter (analog-to-digital converter)
- Ob: Object
- T0: Cycle period
- Tr: Idle period
- Ts: Radiation period

## Claims

1. A sensor, comprising
a detector configured to radiate radio waves whose frequency varies with time into space and receive radio waves from the space, and
a processor device configured to measure distance to an object in the space based on a difference between a frequency of the radio waves radiated and a frequency of the radio waves received, wherein
the detector comprises an analog-to-digital converter configured to output a digital value of a beat signal having the difference between the frequency of the radio waves radiated and the frequency of the radio waves received, the detector being configured to repeatedly operate according to a cycle period that contains a radiation period allowing the detector to radiate radio waves and an idle period prohibiting the detector from radiating radio waves, thereby intermittently radiating radio waves,
the processor device comprises
a frequency analyzer that has a bit-number on an input side thereof larger than a bit-number of the analog-to-digital converter on an output side thereof, the frequency analyzer being configured to compute a frequency spectrum of the beat signal,
a corrector configured to add zeros to the digital value provided to the frequency analyzer, a number of the zeros being equal to a difference between the bit-number of the analog-to-digital converter on the output side and the bit-number of the frequency analyzer on the input side, and
a calculator configured to find a peak frequency corresponding to a power peak value from the frequency spectrum computed with the frequency analyzer to convert the peak frequency into the distance to the object.

2. The sensor of claim 1, wherein the calculator is configured to
find a curve corresponding to three or more frequency bins including a frequency bin corresponding to the power peak value in the frequency spectrum of the beat signal,
define a frequency corresponding to a peak value of the curve as the peak frequency, and
convert the peak frequency into the distance to the object.

3. A sensor of claim 1 or 2, wherein
the processor device comprises a differential processor configured to calculate a difference between respective values of two beat signals derived from two radiation periods with time difference, and
the processor device is configured to provide the frequency analyzer with an output value of the differential processor.

4. A sensor of claim 1 or 2, wherein
the processor device comprises a differential processor configured to calculate a power difference per frequency bin between two frequency spectra computed with the frequency analyzer from two beat signals derived from two radiation periods with time difference, and
the processor device is configured to provide the calculator with output values of the differential processor.

5. A sensor of claim 3 or 4, wherein
one of the two radiation periods is a radiation period in a latest cycle period while the detector is operating, and another of the two radiation periods is a radiation period in a cycle period when the detector starts operating.

6. A sensor of claim 3 or 4, wherein
one of the two radiation periods is a radiation period in a latest cycle period while the detector is operating, and another of the two radiation periods is a radiation period in a cycle period before a predetermined number of radiation periods than the latest cycle period while the detector is operating.

7. A sensor of any one of claims 1 to 6, wherein
the detector is configured to output, as the beat signal, two beat signals that are 90 degrees out of phase by quadrature detection with respect to a reception signal derived from the radio waves received from the space,
the corrector is configured to add the zeros to each of two digital values provided to the frequency analyzer according to the two beat signals, and
the frequency analyzer is configured to receive output values of the corrector, obtained by adding the zeros to each of the two digital values and perform one of a discrete Fourier transform and a fast Fourier transform.

8. A sensor of any one of claims 1 to 7, wherein
the detector is selectively configured to
perform frequency sweep so that the frequency of the radio waves radiated into the space increases in a monotonic manner with time,
perform frequency sweep so that the frequency of the radio waves radiated into the space decreases in a monotonic manner with time, or
perform frequency sweep so that time periods in which the frequency of the radio waves radiated into the space respectively increases and decreases in a monotonic manner with time are included.

9. A sensor of any one of claims 1 to 8, wherein the calculator is configured to be prohibited from measuring the distance when the power peak value in the frequency spectrum does not exceed a threshold.

10. A sensor of any one of claims 1 to 9, wherein the processing device comprises
a determination processor configured to determine whether or not the object is present in a range of a monitoring region defined based on the distance, and
an output interface configured to output a control signal for device control in accordance with a determination result by the determination processor.

11. The sensor of claim 10, wherein the determination processor has a function of determining that the object present in the range of the monitoring region defined based on the distance is a target object, the determination processor having distance that is set as a boundary of the monitoring region.

12. A faucet device, comprising
a sensor of claim 10 or 11, and
a water faucet configured to receive the control signal and then selectively turn on and off to control flow of water, wherein
the processing device is configured to
provide the water faucet with a turn-on signal as the control signal to allow water to flow when the target object is present in the monitoring region, and
provide the water faucet with a turn-off signal as the control signal to stop the water from flowing when the target object is not present in the monitoring region.

13. The faucet device of claim 12, wherein the sensor is integrally attached to the water faucet.
